# EUROPEAN PATENT APPLICATION

(11) **EP 4 357 823 A1**
(43) Date of publication of application: **24.04.2024**
(21) Application number: 22857336.6
(22) Date of filing: 05.05.2022
(51) Int. Cl.: G02B 6/08, G02B 6/26, G02B 6/40, G02B 6/43

(54) **OPTICAL FIBER PLATE AND OPTICAL FIBER PLATE MANUFACTURING METHOD**

(30) Priority: 17.08.2021 CN 202110943146
(71) Applicant: Huawei Technologies Co., Ltd., Longgang Shenzhen, Guangdong 518129 (CN)
(72) Inventor: FAN, Huizhong, Shenzhen, Guangdong 518129 (CN); SHI, Xiting, Shenzhen, Guangdong 518129 (CN); XIAO, Jun, Shenzhen, Guangdong 518129 (CN)
(74) Representative: Isarpatent
(86) International application number: PCT/CN2022/090946
(87) International publication number: WO 2023/020018

(57) **Abstract**

This application provides an optical fiber board and a method for manufacturing the optical fiber board. The optical fiber board (100) includes: at least two base boards (110), where the base boards (110) are superposed on each other, each base board (110) includes a first surface and a second surface, and the first surface and the second surface are two surfaces that are of the base board (110) and that are opposite to each other; and a plurality of first optical fibers (121), where each first optical fiber (121) is disposed on first surfaces of the at least two base boards (110). A second surface of one base board (110) in two adjacent base boards (110) abuts against a first surface of the other base board (110) in the two adjacent base boards (110). A large quantity of optical fibers are arranged orderly on a plurality of base boards by disposing the plurality of base boards, and each optical fiber may be routed from one base board to another base board, so that superposed base boards may communicate with each other, and an optical fiber that needs to be bent is prevented from being bent on one base board. Therefore, an area of a first surface of the base board may be reduced.

## Description

This application claims priority to Chinese Patent Application No. 202110943146. X, filed with the China National Intellectual Property Administration on August 17, 2021 and entitled "OPTICAL FIBER BOARD AND METHOD FOR MANUFACTURING OPTICAL FIBER BOARD", which is incorporated herein by reference in its entirety.

### TECHNICAL FIELD

The present invention relates to the field of optical fiber technologies, and in particular, to an optical fiber board and a method for manufacturing the optical fiber board.

### BACKGROUND

With rapid development of technologies such as a 5th generation mobile communication technology (5th generation mobile communication technology, 5G), 4K video, augmented reality (augmented reality, AR), and virtual reality (virtual reality, VR), a requirement for a capacity of an optical network is increasing, resulting in an increasing quantity of optical fibers for optical transmission. If the quantity of optical fibers is large, the optical fibers are wound with each other to cause disordered wire arrangement, which is unfavorable to connection and identification of the optical fibers, and affects an aesthetic appearance of an entire optical assembly.

### SUMMARY

To resolve the foregoing problem, embodiments of this application provide an optical fiber board and a method for manufacturing the optical fiber board. A large quantity of optical fibers are orderly arranged on base boards of the optical fiber board, so that the large quantity of optical fibers may be prevented from being wound with each other to cause disordered wire arrangement. In addition, each optical fiber may be disposed on one base board, or may be routed from one base board to another base board, so that an area of the base board may be reduced. Therefore, the optical fiber board may be applied to an electronic device with limited space.

Therefore, the following technical solutions are used in embodiments of this application.

According to a first aspect, this application provides an optical fiber board, including: at least two base boards, where the base boards are superposed on each other, each base board includes a first surface and a second surface, and the first surface and the second surface are two surfaces that are of the base board and that are opposite to each other; and at least one first optical fiber, where each first optical fiber includes a first part, a second part, and a third part, the first part is connected to the second part by using the third part, the first part is disposed on a first surface of one base board, and the second part is disposed on a first surface of the other base board. A second surface of one base board in two adjacent base boards is superposed on a first surface of the other base board in the two adjacent base boards, and the at least two base boards include the two adjacent base boards.

In this implementation, a large quantity of optical fibers are arranged orderly on a plurality of base boards by disposing the plurality of base boards, and each optical fiber may be routed from one base board to another base board, so that superposed base boards may communicate with each other, and an optical fiber that needs to be bent is prevented from being bent on one base board. Therefore, an area of the first surface of the base board may be reduced, and the optical fiber board may be applied to more fields.

In an implementation, the optical fiber board further includes: at least one second optical fiber, where each second optical fiber is disposed on the first surface of the base board.

In this implementation, a plurality of second optical fibers are disposed on the at least two base boards, so that more optical fibers are arranged in the optical fiber board. Therefore, a large quantity of optical fibers may be prevented from being wound with each other to cause disordered wire arrangement, and the optical fiber board may be applied to more fields.

In an implementation, an adhesive is disposed on a second surface of at least one base board, and is configured to stick a first surface of one base board to a second surface of the other base board, and the at least two base boards include the at least one base board.

In this implementation, the adhesive is disposed on each second surface, so that an integrated whole is formed after each base board is superposed and is not easy to scatter.

In an implementation, the adhesive is disposed on the first surfaces of the at least two base boards, and is configured to stick and fasten the at least one first optical fiber and the at least one second optical fiber to the first surfaces of the base boards.

In this implementation, the adhesive is disposed on the first surfaces of the base boards, so that optical fibers are fastened to locations of the first surfaces, to avoid a change in the locations of the optical fibers on the first surfaces and a change in shapes of the bent optical fibers under recovery force.

In an implementation, a plurality of ports are disposed at side edges of the first surfaces of the at least two base boards, and are configured to place two ends of the first optical fiber and two ends of the second optical fiber.

In this implementation, the plurality of ports may be disposed on the edges of the first surfaces of the base boards, and the two ends of each optical fiber are disposed at the ports, so that each port is provided with ends of a specified quantity of optical fibers. Subsequently, when the optical fiber board is coupled to another optical connector, each optical connector may be directly coupled to the ends of the optical fibers at one port.

In an implementation, a first end of the first optical fiber that is disposed on first surfaces of a first base board and a second base board is located at one side edge of the first base board, and the first end is one end that is of the first optical fiber disposed on the first surfaces of the first base board and the second base board and that extends to the second base board.

In this implementation, if a plurality of first optical fibers on one base board are connected to another base board, the plurality of first optical fibers need to extend from a side edge of the first surface of an original base board, and then enter the first surface of a rear base board from a side edge of the first surface of the original base board. If the plurality of first optical fibers extend from a plurality of sides of the first surface of the original base board, or enter the first surface of the rear base board from a plurality of side edges of the first surface of the original base board, the rear base board cannot be rotated and superposed on the original base board subsequently.

In an implementation, an area of the at least two base boards is not less than an area of a minimum circle formed by bending the second optical fiber.

In this implementation, an area of the base boards in the optical fiber board determines an application field of the optical fiber board. Therefore, a smaller area of the base boards is better. However, considering that each base board may have a bent optical fiber, an area of each base board is not less than an area of a minimum circle formed by bending the optical fiber, which ensures an application field of the optical fiber board, and ensures that one bent optical fiber may be disposed on each base board.

In an implementation, the base boards are thin boards made of a polyimide material.

In this implementation, the polyimide material has a good heat preservation effect. Therefore, heating and heat preservation effects may be better performed on the optical fiber by using the polyimide material.

In an implementation, the optical fiber board further includes: at least one protective sleeve, disposed on the third part of the at least one first optical fiber.

In this implementation, a partial optical fiber located between two base boards is easy to be broken off because the partial optical fiber is exposed to the outside. Therefore, one protective sleeve is disposed on the partial optical fiber, which may effectively protect the optical fiber from being broken off.

According to a second aspect, this application provides a method for manufacturing an optical fiber board. The optical fiber board includes at least two base boards and at least one first optical fiber, and the method includes: arranging the at least two base boards on a plane, where each base board includes a first surface and a second surface, and the first surface and the second surface are two surfaces that are of the base board and that are opposite to each other; disposing each first optical fiber on the first surfaces of the at least two base boards; folding a first base board by a set angle in a normal direction of the first surface, and then rotating the first base board by a set angle along a plane on which the first surface is located, to enable the first base board to be above a second base board, where the first base board and the second base board are two adjacent base boards, and the at least two base boards include the first base board and the second base board; and superposing the second surface of the first base board on the first surface of the second base board.

In this implementation, if one optical fiber is disposed on a plurality of base boards, in a superposition process of the plurality of base boards, one base board is first lifted by the set angle in the normal direction of the first surface, and then the base board is rotated by the set angle along the plane on which the first surface is located, is transferred right above the first surface of another base board, and then is superposed on the second surface of the another base board. In a prerequisite of breaking off the optical fiber, two base boards on which the optical fiber is arranged may be superposed together, to form the optical fiber board. Therefore, a manufacturing process is greatly reduced and production costs are reduced.

In an implementation, the arranging the at least two base boards on a plane includes: disposing the at least two base boards on the plane at an equal interval, where a distance between two adjacent base boards is not less than a circumference of a minimum circle formed by bending the first optical fiber.

In an implementation, after the disposing each first optical fiber on the first surfaces of the at least two base boards, the method further includes: fastening each first optical fiber to the first surfaces of the at least two base boards.

In an implementation, the fastening each first optical fiber to the first surfaces of the at least two base boards includes: disposing an adhesive on the at least two base boards, to stick and fasten each first optical fiber to the first surfaces of the at least two base boards.

In an implementation, the superposing the second surface of the first base board on the first surface of the second base board includes: disposing the adhesive on the second surface of the first base board, to stick the first surface of the second base board to the second surface of the first base board.

In an implementation, after the arranging the at least two base boards on a plane, the method further includes: arranging at least one second optical fiber on the at least two base boards separately, where the optical fiber board further includes the at least one second optical fiber.

In an implementation, the method further includes: disposing at least one protective sleeve on a part that is of the at least one first optical fiber and that is not located at the first surfaces of the base boards, where the optical fiber board further includes the at least one protective sleeve.

According to a third aspect, this application provides an optical assembly, including: one bottom plate, at least one connection device, and at least two optical fiber boards according to possible implementations of the first aspect, where the optical fiber boards are connected by using the at least one connection device.

According to a fourth aspect, this application provides an electronic device, including: at least one optical assembly according to a possible implementation of the third aspect.

### BRIEF DESCRIPTION OF DRAWINGS

The following briefly describes accompanying drawings that need to be used in descriptions of embodiments or a conventional technology.
FIG. 1 is a schematic diagram of a structure of an optical fiber board according to an embodiment of this application;
FIG. 2 is a schematic flowchart of a method for manufacturing an optical fiber board according to an embodiment of this application;
FIG. 3 is a schematic diagram of fiber arrangement in an optical fiber board manufacturing process according to an embodiment of this application;
FIG. 4(a) is a schematic diagram of a first rotation step in an optical fiber board manufacturing process according to an embodiment of this application;
FIG. 4(b) is a schematic diagram of a second rotation step in an optical fiber board manufacturing process according to an embodiment of this application;
FIG. 4(c) is a schematic diagram of a third rotation step in an optical fiber board manufacturing process according to an embodiment of this application;
FIG. 5 is a schematic diagram after an optical fiber board is manufactured according to an embodiment of this application;
FIG. 6 is a schematic diagram of a manufacturing process of an optical fiber board according to an embodiment of this application;
FIG. 7 is a schematic diagram of a shape of a base board according to an embodiment of this application; and
FIG. 8 is a schematic diagram of a structure of an optical assembly according to an embodiment of this application;

### DESCRIPTION OF EMBODIMENTS

The following describes technical solutions in embodiments of this application with reference to accompanying drawings in embodiments of this application.

In descriptions of this application, it should be noted that orientation or location relationships indicated by terms "center", "above", "below", "front", "rear", "left", "right", "vertical", "horizontal", "top", "bottom", "inner", "outer", and the like are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In descriptions of this application, it should be noted that, unless otherwise specified and limited, the terms such as "mount", "link", and "connect" should be understood broadly. For example, the term "connect" may be a fixed connection, a detachable connection, an abutting connection, or integration. A person of ordinary skill in the art may interpret specific meanings of the foregoing terms in this application according to specific cases.

In the descriptions of this specification, specific features, structures, materials, or characteristics may be combined in a proper manner in any one or more of embodiments or examples.

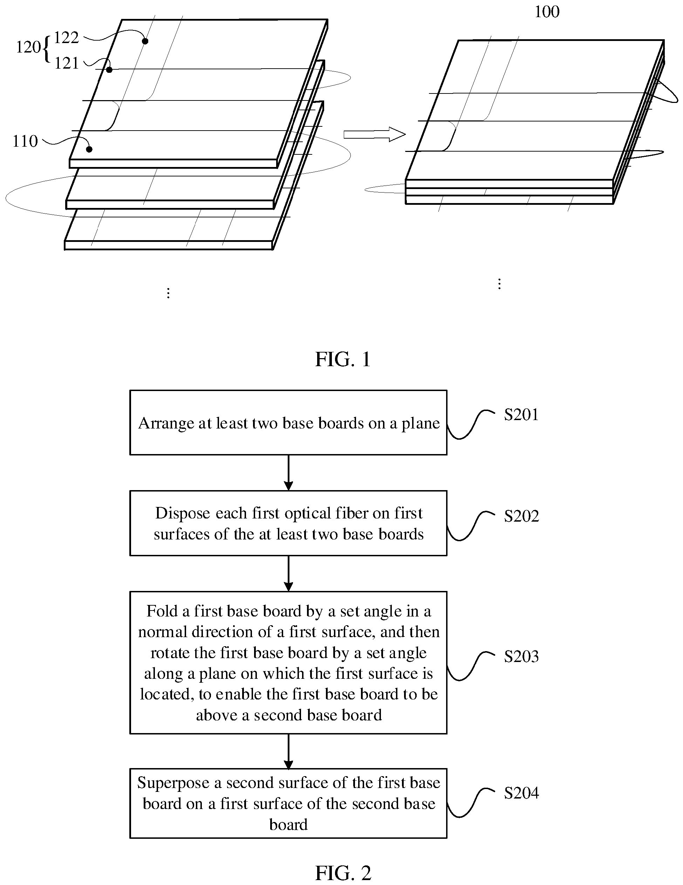

FIG. 1 is a schematic diagram of a structure of an optical fiber board according to an embodiment of this application. As shown in FIG. 1, the optical fiber board 100 includes a plurality of base boards 110 and a plurality of optical fibers 120. A mutual disposing relationship between the base boards 110 and the plurality of optical fibers 120 is as follows:

The base board 110 is generally a thin board made of a polyimide (polyimide, PI) material, or a material such as a heating film, and is configured to carry the optical fiber and implement functions of heating and heat preservation for the optical fiber. A shape of the base board 110 may be a regular shape, for example, a rectangle in FIG. 1, a circle, a trapezoid, or the like, or may be an irregular shape, for example, a shape of a region where the optical fiber board 100 may be disposed, a specified shape that meets a specific requirement, or the like. This is not limited herein in this application.

The base board 110 shown in FIG. 1 is used as an example. The base board 110 is generally a thin board that is very thin, and has only two surfaces with large areas for arranging optical fibers. For ease of subsequent description, it is specified that, as shown in FIG. 1, an upward surface is a "first surface", and a downward surface is a "second surface".

Each base board 110 is of a same shape, so that a shape of the optical fiber board 100 formed after the plurality of base boards 110 are superposed subsequently is beautiful. Definitely, if there is a limitation of another objective condition, the shape of each 110 may be different, so that the optical fiber board 100 formed after the plurality of base boards are superposed may meet the limitation of the objective condition.

Optionally, to facilitate superposition firmness between the base boards 110, an adhesive may be disposed on second surfaces of the plurality of base boards 110, so that a first surface of one base board 110 is stuck on a second surface of another base board 110 by using the adhesive, to firmly superpose the plurality of base boards 110 together. The adhesive may be disposed on a second surface of one bottommost base board 110, to facilitate sticking the entire optical fiber board 100 to another electronic device. Alternatively, the adhesive may not be disposed. Preferably, the adhesive may cover the second surfaces of the entire base boards 110, so that a gap between two base boards 110 after the two base boards 110 are stuck is avoided, and the gap not only affects superposition firmness of the plurality of base boards 110, but also affects an aesthetic appearance of the entire optical fiber board 100.

The adhesive may be a common glue, a double-sided tape, or the like. This is not limited in this application.

In this application, the plurality of optical fibers 120 are arranged on the first surfaces of the base boards 110. The optical fibers 120 are fibers made of glass or plastic, and therefore, plasticity of the optical fibers 120 is poor, and the optical fibers 120 cannot be bent or twisted at will like a wire. Although the optical fibers 120 may be bent, a minimum bendable radius can only reach 10 mm. Therefore, a side length of the base boards 110 used to bear the optical fibers 120 cannot be less than 20 mm, or a radius cannot be less than 10 mm. Otherwise, the optical fibers 120 cannot be arranged on the first surfaces of the base boards 110.

A manner in which the plurality of optical fibers 120 are arranged on the first surfaces of the base boards 110 is as follows: With reference to FIG. 1, the optical fiber 120 may extend from a side edge on the first surface of the base board 110 to another side edge in a straight line manner; the optical fiber 120 may extend from a side edge on the first surface of the base board 110 to a middle part of the first surface, be bent, and then extend to another side edge; the optical fiber 120 may extend from a side edge on the first surface of the base board 110 to a middle part of the first surface, and then be bent to be back to a different location at a same side edge; or the optical fiber 120 may pass through, from a side edge on the first surface of one base board 110, the base board 110, and then enter and pass through, from a side edge on the first surface of another base board 110, the another base board 110, or the like. This is not limited herein in this application.

Two ends of each optical fiber 120 may be randomly arranged at locations of edges, or may be evenly arranged at locations of side edges. This is not limited in this application. Preferably, a plurality of ports may be disposed on the edges of the first surfaces of the base boards 110, and the two ends of each optical fiber 120 are disposed at the ports, so that each port is provided with ends of a specified quantity of optical fibers 120. Subsequently, when the optical fiber board 100 is coupled to another optical connector, each optical connector may be directly coupled to the ends of the optical fibers 120 at one port.

Optionally, to facilitate arranging the optical fibers 120 on the first surfaces of the base boards 110, the adhesive may also be disposed on the first surfaces of the base boards 110. When the optical fibers are arranged at locations on the first surfaces of the base boards 110, the optical fibers 120 are fastened at the locations by using the adhesive, to avoid a change in the locations of the optical fiber 120 on the first surfaces and a change in shapes of the bent optical fibers 120 under recovery force. Alternatively, after all required optical fibers 120 are disposed on the first surfaces of the base boards 110, the adhesive may be sprayed on the first surfaces of the base boards 110, to fasten the optical fibers 120 at set locations. The adhesive may be disposed in another manner. This is not limited in this application.

In this application, the optical fiber board 100 further includes a plurality of protective sleeves (not shown in the figure). For an optical fiber 120 arranged on at least two base boards 110, a part of the optical fiber 120 is located on one base board 110, and another part of the optical fiber 120 is located on the other base board 110. A partial optical fiber connected between the two base boards 110 is located outside the base boards 110, and the partial optical fiber is exposed to the outside. In any case of manufacturing, installation, or use, the partial optical fiber outside the base boards is easily broken off. Therefore, the protective sleeves are disposed on the partial optical fiber outside the base boards, so that the part of the optical fiber may be broken off on the surface. The protective sleeves may be made of a same material as the base board, or may be a material with strong stiffness such as plastic or glass. This is not limited in this application.

In this embodiment of this application, a large quantity of optical fibers may be orderly arranged on the plurality of base boards, and the plurality of base boards are superposed together to form one optical fiber board, so that the large quantity of optical fibers can be prevented from being wound with each other to cause disordered wire arrangement. In addition, in the large quantity of optical fibers that are in different directions and that are arranged on each base board, each optical fiber may be disposed on one base board, or may be routed from one base board to another base board, so that superposed base boards can communicate with each other. Therefore, the optical fiber is prevented from being bent to a full circle in one base board to cause a large first surface of the base board. In this application, an area of the base board may be reduced, and the optical fiber board may be applied to more fields.

The optical fibers 120 may be classified into two types according to a quantity of the optical fibers disposed on the base boards 110. One type of optical fiber is disposed on first surfaces of two or more base boards 110 simultaneously, and is subsequently referred to as a "first optical fiber 121". The other type of optical fiber is disposed only on a first surface of one base board 110, and is subsequently referred to as a "second optical fiber 122".

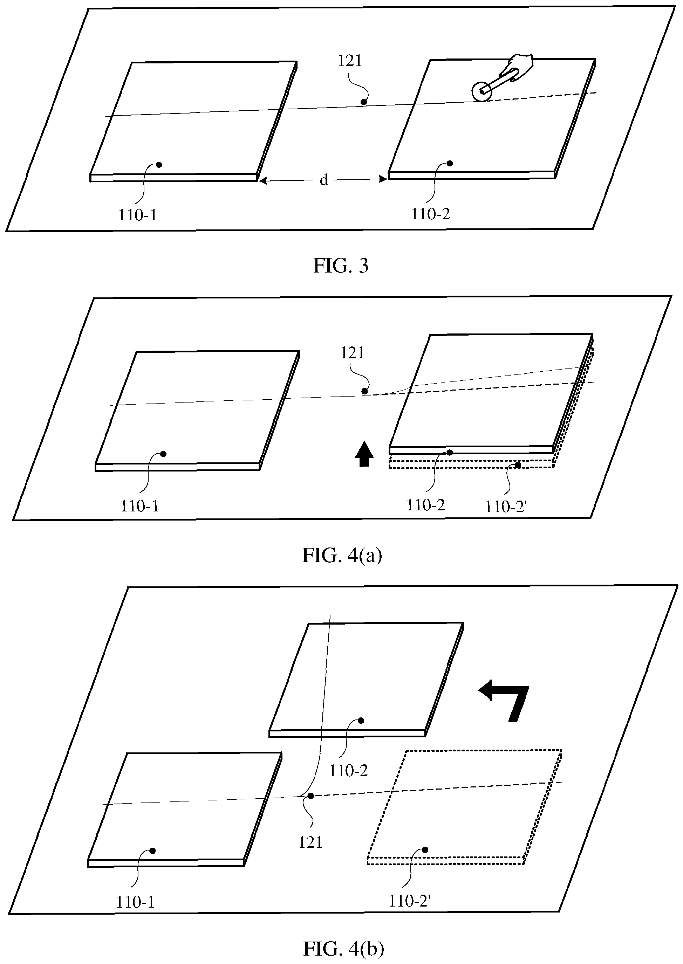

FIG. 2 is a schematic flowchart of manufacturing an optical fiber board according to an embodiment of this application. As shown in FIG. 2, a manufacturing process of an optical fiber board 100 including a first optical fiber is as follows (using one first optical fiber 121 and two base boards (110-1, 110-2) as an example):
Step S201: Arrange at least two base boards on a plane. Details are as follows:
A shape of the optical fiber board 100 that can be arranged is determined according to a disposing location of the designed optical fiber board 100. Therefore, base boards 110 of different shapes are cut, so that after a plurality of base boards 110 are superposed subsequently, the base boards 110 may be disposed at a reserved location. Optionally, as shown in FIG. 3, a shape of the base board 110-1 may be the same as or different from a shape of the base board 110-2. This is not limited herein in this application.

Step S202: Dispose each first optical fiber on first surfaces of the at least two base boards. Details are as follows:
With reference to FIG. 3, the base board 110-1 and the base board 110-2 are arranged on one plane, and the base board 110-1, the base board 110-2, and more base boards are arranged in a straight line. A distance d between the base board 110-1 and the base board 110-2 needs to be greater than a circumference of a minimum circle formed by bending an optical fiber, to prevent the first optical fiber 121 from being broken off after the base board 110-2 is superposed on the base board 110-1.

An optical fiber arrangement machine slides from the base board 110-1 to the base board 110-2, and arranges the first optical fiber 121 on a first surface of the base board 110-1 and a first surface of the base board 110-2. Preferably, if a plurality of first optical fibers on the base board 110-2 are connected to the base board 110-1, the plurality of first optical fibers need to extend from a side edge of the first surface of the base board 110-2, and then enter the first surface of the base board 110-1 from a side edge of the first surface of the base board 110-1. If the plurality of first optical fibers extend from a plurality of sides of the first surface of the base board 110-2, or enter the first surface of the base board 110-1 from a plurality of side edges of the first surface of the base board 110-1, the base board 110-2 cannot be rotated and superposed on the base board 110-1 subsequently.

After the first optical fiber 121 is disposed on the first surface of the base board 110-1 and the first surface of the base board 110-2, an adhesive is sprayed on the first surfaces of the two base boards. The first optical fiber 121 is stuck and fastened to the first surfaces of the two base boards, to avoid a change in locations of the first optical fiber 121 on the first surfaces.

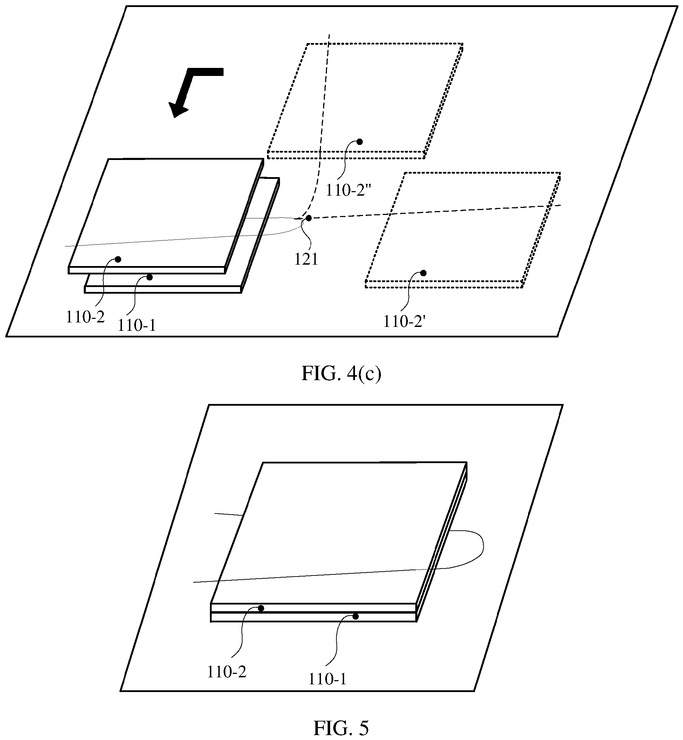

Step S203: Fold a first base board by a set angle in a normal direction of the first surface, and then rotate the first base board by a set angle along a plane on which the first surface is located, to enable the first base board to be above a second base board. Details are as follows:
As shown in FIG. 4(a), in a process of superposing the base board 110-1 on the base board 110-2 after the optical fiber arrangement machine arranges the first optical fiber 121, the base board 110-2 is first lifted by the set angle in the normal direction of the first surface, to facilitate subsequent rotating of the base board 110-2. As shown in FIG. 4(b) and FIG. (c), the base board 110-2 is rotated by 180° along a plane on which the first surface of the lifted base board 110-2 is located, to enable the base board 110-2 to be transferred right above the first surface of the base board 110-1. In addition, a second surface of the base board 110-2 is close to the first surface of the base board 110-1, and the first surface of the base board 110-2 is away from the first surface of the base board 110-1.

As shown in FIG. 5, the second surface of the base board 110-2 that is above the base board 110-1 is disposed on the first surface of the base board 110-1, and the base board 110-2 is stuck and fastened to the base board 110-1 by using the adhesive, so that the base board 110-2 is superposed on the base board 110-1, to form the optical fiber board 100.

After the base board 110-2 is superposed on the base board 110-1, a circular plane formed by bending the optical fiber between the two base boards is almost parallel to the first surface of the base board 110-2 (due to a thickness of the base board 110-2, the circular plane formed by the bent optical fiber may be lifted by a very small angle along the normal direction of the first surface of the base board 110-2), so that the circular plane formed by the bent optical fiber is prevented from being perpendicular to or approximately perpendicular to the normal direction of the first surface of the base board 110-2 to cause the formed optical fiber board 100 to occupy space of a device.

Step S204: Superpose the second surface of the first base board on the first surface of the second base board. Details are as follows:

After the optical fiber board 100 is formed, because the second surface of the base board 110-2 is stuck and fastened on the first surface of the base board 110-1 by using the adhesive, and a partial optical fiber between the base board 110-1 and the base board 110-2 is exposed to the outside and is easily broken off, a protective sleeve may be disposed on the exposed partial optical fiber to protect the exposed partial optical fiber from being broken off easily.

In this embodiment of this application, if one optical fiber is disposed on a plurality of base boards, in a superposition process of the plurality of base boards, one base board is first lifted by the set angle in the normal direction of the first surface, and then the base board is rotated by the set angle along the plane on which the first surface is located, is transferred right above the first surface of another base board, and then is superposed on the second surface of the another base board. In a prerequisite of breaking off the optical fiber, two base boards on which the optical fiber is arranged may be superposed together, to form the optical fiber board. Therefore, a manufacturing process is greatly reduced and production costs are reduced.

If the optical fiber board 100 includes only the second optical fiber 122 but does not include the first optical fiber 121, because no first optical fiber 121 is connected between base boards 110 in the optical fiber board 100, it is easy to manufacture the optical fiber board 100 of this type. Details are as follows:
A plurality of second optical fibers 122 are first disposed on the base boards 110 by using the optical fiber arrangement machine. After a specified quantity of second optical fibers 122 are disposed on the base boards 110, the second surface of each base board 110 is sequentially disposed on the first surface of an adjacent base board 110. The second surface of each base board 110 is stuck and fastened to the first surface of the adjacent base board 110 by using the adhesive on the second surface, so that the plurality of base boards 110 are superposed together to form the optical fiber board 100. This is not limited in this application.

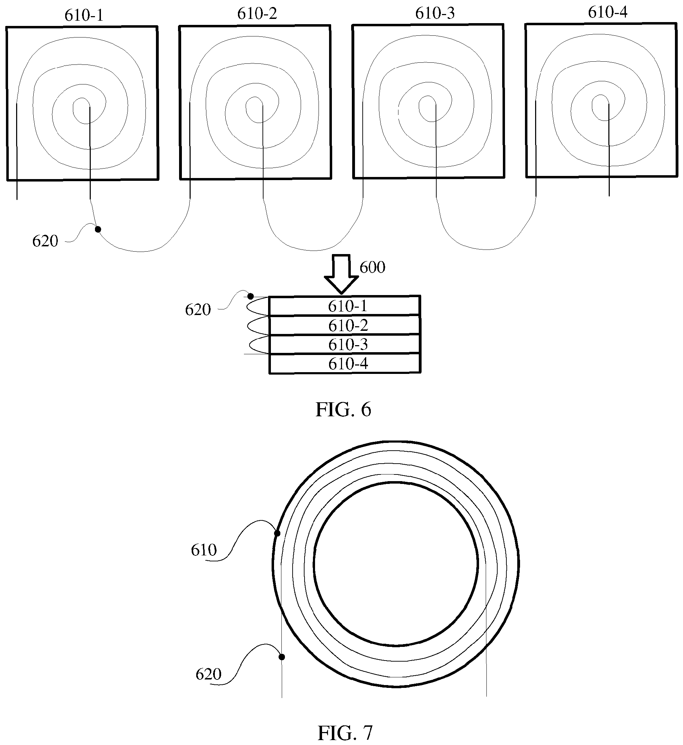

FIG. 6 is a schematic diagram of a structure of an optical fiber board according to an embodiment of this application. As shown in FIG. 6, an optical fiber board 600 formed by an erbium-doped fiber 620 with an ultra-long optical amplifier includes a plurality of base boards 610 (four base boards are used as an example in the figure) and one erbium-doped fiber 620. Shapes of the base boards 610 and the erbium-doped fiber 620 correspond to FIG. 1 and descriptions corresponding to FIG. 1. Details are not described herein again in this application.

A specific process of forming the optical fiber board 600 is as follows:
Step 1: A shape of the optical fiber board 600 that can be arranged is determined according to a disposing location of the designed optical fiber board 600. Therefore, base boards 610 of different shapes are cut, so that after the plurality of base boards 610 are superposed subsequently, the base boards 610 may be disposed at a reserved location. Optionally, shapes of four base boards 610 may be the same or may be different. This is not limited in this application.
Step 2: With reference to FIG. 6, four base boards 610 are arranged on a plane, and the four base boards 610 are arranged in a straight line. The length of a reserved erbium-doped fiber 620 between two adjacent base boards 610 needs to be greater than a circumference of a minimum circle formed by bending the optical fiber, so that the two adjacent base boards 610 are prevented from being superposed together and the erbium-doped fiber 620 is prevented from being broken off.
   An optical fiber arrangement machine sequentially arranges the erbium-doped fiber 620 on one surface (this surface is referred to as a "first surface") of a base board 610-1, a base board 610-2, a base board 610-3, and a base board 610-4. A shape of the erbium-doped fiber 620 arranged on the first surface of each base board is a spiral shape, and the erbium-doped fiber 620 is spiraled from an outer side to a circle center, then extends from the circle center to the first surface of the base board, and then enters the first surface of another base board.
Step 3: After the erbium-doped fiber 620 is arranged on the first surfaces of the four base boards 610, an adhesive is sprayed on the first surfaces of the four base boards 610, to stick and fasten the erbium-doped fibers 620 on the first surfaces of the four base boards 610, to avoid a change in a location of the erbium-doped fibers 620 on the first surfaces.
Step 4: After the optical fiber arrangement machine arranges the erbium-doped fiber 620, in a process of superposing two adjacent base boards 610, the base board 610-1 and the base board 610-2 are used as an example. The base board 610-2 is first lifted by a set angle in a normal direction of the first surface, and then the base board 610-2 is translated on a plane on which the first surface is located, to be translated right above the first surface of the base board 610-1. In addition, a surface (subsequently referred to as a "second surface") of the base board 610-2 on which the erbium-doped fiber 620 is not arranged is close to the first surface of the base board 610-1, and the first surface of the base board 610-2 is away from the first surface of the base board 610-1.

Finally, the second surface that is of the base board 610-2 and that is above the base board 610-1 is disposed on the first surface of the base board 610-1, and the base board 610-2 is stuck and fastened to the base board 610-1 by using the adhesive, so that the base board 610-2 is superposed on the base board 610-1. A superposition manner of the base board 610-3 and the base board 610-4 is deduced by analogy. Details are not described in this application again. The four base boards 610 are superposed together to form the optical fiber board 600, and a structure shown in FIG. 6 is obtained.

In this application, because only the erbium-doped fiber 620 is disposed on the base boards 610, shapes of the base boards 610 are not limited to a rectangle shown in FIG. 6, and may alternatively be another shape, such as a disk shape, an ellipse shape, or a ring shape. This is not limited in this application. For example, as shown in FIG. 7, when the shapes of the base boards 610 are ring shapes, the optical fiber arrangement machine sequentially arranges the erbium-doped fiber 620 on the first surfaces of the base boards 610. A shape of the erbium-doped fiber 620 disposed on the first surfaces of the base boards 610 is a spiral shape, and the erbium-doped fiber 620 is spiraled from an outer side to a circle center, and then extends from the circle center to the first surfaces of the base boards.

In this embodiment of this application, the erbium-doped fibers with a long length may be orderly arranged on a plurality of base boards, and the plurality of base boards are superposed together to form one optical fiber board, so that the erbium-doped fibers with the long length may be prevented from being wound together to cause disorder of the erbium-doped fiber and to affect an aesthetic appearance.

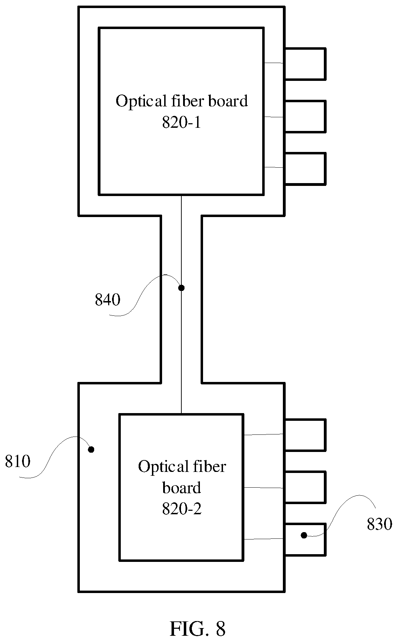

FIG. 8 is a schematic diagram of a structure of an optical assembly according to an embodiment of this application. As shown in FIG. 8, the optical assembly 800 includes a bottom plate 810, at least one optical fiber board 820, and at least one optical connector 830. Structures of the three types of assemblies and connection relationships among the three types of assemblies are as follows:
The bottom plate 810 generally is an assembly that is on an electronic device and that may be arranged with an optical fiber, for example, a printed circuit board (printed circuit board, PCB), an electronic component housing, and the like. This is not limited herein in this application. A shape of the bottom plate 810 is not limited to the "8" shape shown in FIG. 7, and may alternatively be any other shape. This is not limited in this application.

The optical fiber board 820 may be the optical fiber board that is in FIG. 1 to FIG. 7 and that is recorded in the foregoing content corresponding to FIG. 1 to FIG. 7, or may be an optical fiber board formed by one base board. This is not limited in this application. In a connection manner between an optical fiber board 820-1 and an optical fiber board 820-2, a connection device 740 such as a flexible optical fiber or an optical cable may be used to connect ends of extended optical fibers in the optical fiber board 820-1 and the optical fiber board 820-2, so that two adjacent optical fiber boards 820 may communicate with each other, and the optical assembly 800 may be applied to more fields.

The optical connector 830 is connected to optical fibers at ports on the optical fiber board 820, and is fastened on the bottom plate 810, to connect the optical fibers on the optical fiber board 820 to another external optical assembly.

According to the optical assembly 800 provided in this embodiment of this application, the optical assembly includes at least one optical fiber board that is in FIG. 1 to FIG. 7 and that is recorded in the foregoing content corresponding to FIG. 1 to FIG. 7. Therefore, the optical assembly 800 has all or at least some advantages of the optical fiber board.

An embodiment of this application further provides an electronic device, and the electronic device includes at least one optical assembly 800. The optical assembly 800 may be the optical assembly 800 that is in FIG. 8 and that is described in corresponding content of FIG. 8. The electronic device includes the optical assembly 800, and therefore, the electronic device has all or at least some advantages of the optical assembly 800.

In the descriptions of this specification, specific features, structures, materials, or characteristics may be combined in a proper manner in any one or more of embodiments or examples.

Finally, it should be noted that, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can still be made to some technical features thereof, without departing from the spirit and scope of the technical solutions of embodiments of this application.

## Claims

1. An optical fiber board, comprising:
at least two base boards (110), wherein the base boards (110) are superposed on each other, each base board (110) comprises a first surface and a second surface, and the first surface and the second surface are two surfaces that are of the base board (110) and that are opposite to each other; and
at least one first optical fiber (121), wherein each first optical fiber (121) comprises a first part, a second part, and a third part, the first part is connected to the second part by using the third part, the first part is disposed on a first surface of one base board (110), and the second part is disposed on a first surface of the other base board (110), wherein
a second surface of one base board (110) in two adjacent base boards (110) is superposed on a first surface of the other base board (110) in the two adjacent base boards (110), and the at least two base boards (110) comprise the two adjacent base boards (110).

2. The optical fiber board according to claim 1, wherein the optical fiber board further comprises:
at least one second optical fiber (122), wherein each second optical fiber (122) is disposed on the first surface of the base board (110).

3. The optical fiber board according to claim 1 or 2, wherein
an adhesive is disposed on a second surface of at least one base board (110), and is configured to stick a first surface of one base board (110) to a second surface of the other base board (110), and the at least two base boards (110) comprise the at least one base board (110).

4. The optical fiber board according to claim 2 or 3, wherein
the adhesive is disposed on the first surfaces of the at least two base boards (110), and is configured to stick and fasten the at least one first optical fiber (121) and the at least one second optical fiber (122) to the first surfaces of the base boards (110).

5. The optical fiber board according to any one of claims 2 to 4, wherein
a plurality of ports are disposed at side edges of the first surfaces of the at least two base boards (110), and are configured to place two ends of the first optical fiber (121) and two ends of the second optical fiber (122).

6. The optical fiber board according to any one of claims 1 to 5, wherein a first end of the first optical fiber (121) that is disposed on first surfaces of a first base board and a second base board is located at one side edge of the first base board, and the first end is one end that is of the first optical fiber (121) disposed on the first surfaces of the first base board and the second base board and that extends to the second base board.

7. The optical fiber board according to any one of claims 2 to 6, wherein an area of the at least two base boards (110) is not less than an area of a minimum circle formed by bending the second optical fiber (122).

8. The optical fiber board according to any one of claims 1 to 7, wherein the base boards (110) are thin boards made of a polyimide material.

9. The optical fiber board according to any one of claims 1 to 8, wherein the optical fiber board further comprises:
at least one protective sleeve, disposed on the third part of the at least one first optical fiber (121).

10. A method for manufacturing an optical fiber board, wherein the optical fiber board comprises at least two base boards and at least one first optical fiber, and the method comprises:
arranging the at least two base boards on a plane, wherein each base board comprises a first surface and a second surface, and the first surface and the second surface are two surfaces that are of the base board and that are opposite to each other;
disposing each first optical fiber on the first surfaces of the at least two base boards;
folding a first base board by a set angle in a normal direction of the first surface, and then rotating the first base board by a set angle along a plane on which the first surface is located, to enable the first base board to be above a second base board, wherein the first base board and the second base board are two adjacent base boards, and the at least two base boards comprise the first base board and the second base board; and
superposing the second surface of the first base board on the first surface of the second base board.

11. The method according to claim 10, wherein the arranging the at least two base boards on a plane comprises:
disposing the at least two base boards on the plane at an equal interval, wherein a distance between two adjacent base boards is not less than a circumference of a minimum circle formed by bending the first optical fiber.

12. The method according to claim 10 or 11, wherein after the disposing each first optical fiber on the first surfaces of the at least two base boards, the method further comprises:
fastening each first optical fiber to the first surfaces of the at least two base boards.

13. The method according to claim 12, wherein the fastening each first optical fiber to the first surfaces of the at least two base boards comprises:
disposing an adhesive on the at least two base boards, to stick and fasten each first optical fiber to the first surfaces of the at least two base boards.

14. The method according to any one of claims 10 to 13, wherein the superposing the second surface of the first base board on the first surface of the second base board comprises:
disposing the adhesive on the second surface of the first base board, to stick the first surface of the second base board to the second surface of the first base board.

15. The method according to any one of claims 10 to 14, wherein after the arranging the at least two base boards on a plane, the method further comprises:
arranging at least one second optical fiber on the first surface of one base board, wherein the optical fiber board further comprises the at least one second optical fiber.

16. The method according to any one of claims 10 to 15, wherein the method further comprises:
disposing at least one protective sleeve on a part that is of the at least one first optical fiber and that is not located at the first surfaces of the base boards, wherein the optical fiber board further comprises the at least one protective sleeve.

17. An optical assembly, comprising:
one bottom plate,
at least one connection device, and
at least two optical fiber boards according to claims 1 to 9, wherein the optical fiber boards are connected by using the at least one connection device.

18. An electronic device, comprising: at least one optical assembly according to claim 17.
